# EUROPEAN PATENT APPLICATION

(11) **EP 1 808 110 A1**
(43) Date of publication of application: **18.07.2007**
(21) Application number: 06000933.9
(22) Date of filing: 17.01.2006
(51) Int. Cl.: A47J 31/057, A47J 31/06

(54) **Automatic filter tea/coffee maker**

(71) Applicant: Lee, Wen-Ching, Taipei (TW)
(72) Inventor: Lee, Wen-Ching, Taipei (TW)
(74) Representative: Becker Kurig Straus

(57) **Abstract**

This invention presented is an automatic filter tea/coffee maker, comprising a body (1) and a supporting plate (11) located on the body (1) of the tea maker, a brew cup (2), which can be flexibly dismantled from the supporting plate (11), the brew cup (2) has a strainer (3) positioned inside thereof, the supporting plate (11) has a warm-keeping cup (4) positioned below thereof, a guide funnel (12) for water to flow through is positioned between the warm-keeping cup (4) and the brew cup (2), in addition, the guide funnel (12) has a solenoid valve (5) installed below thereof to control the time of brewing tea in the brew cup. In view of the foregoing, the invention can separate tea leaves and tea juice without making the tea stewed, in addition, keep the tea warm, so as to generate further economic effect.

## Description

### BACKGROUND OF THE INVENTION

### (1) FIELD OF THE INVENTION

This invention relates to an automatic filter tea/coffee maker, in particular, to a device that can separate tea leaves and tea juice without making the tea stewed, in addition, keep the tea warm, so as to generate further economic effect.

### (2) DESCRIPTION OF THE PRIOR ART

Generally, people use a conventional tea vessel set or a tea cup set to brew tea; nevertheless, the biggest problems for people to make tea are as follows:
(1) after the tea is made, people forget to separate tea leaves and tea, so as to make the tea stewed; or
(2) after the tea is made and tea leaves and tea are separated, however, people forget to drink the tea, so that the tea becomes cool and oxidized.
(3) there are a variety of tea categories sold on the market and the tea brewing time for different tea categories varies; it is difficult for people to use a timekeeper to make a best cup of tea.

Therefore, to solve the aforesaid problems, the inventor applies the principle of conventional coffer maker with many years of experience in the industry to develop an automatic filter tea/coffee maker with more practical application for use.

### SUMMARY OF THE INVENTION

The present invention mainly comprises a main body, a supporting plate positioned on the body and a brew cup, which can be flexibly dismantled from the supporting plate; the brew cup has a strainer positioned inside thereof, a warm-keeping cup is positioned below the supporting plate, the brew cup positioned above the supporting plate, a guide funnel for water to flow through is positioned between the warm-keeping cup and the brew cup, in addition, the guide funnel has a solenoid valve installed below thereof to control the time of brewing tea in the brew cup.

The main objective of the invention aims at utilizing the guide funnel, which is positioned between the brew cup and the warm-keeping cup, and the control of solenoid valve to separate tea leaves from tea, thereby brewed tea would not become stewed, but is able to be kept warm.

### BRIEF DESCRIPTION OF THE DRAWINGS

Figure 1 is a side view of the invention;
Figure 2 is a perspective view showing an initial state of solenoid valve of the invention;
Figure 3 is a perspective view showing a switching-on state of solenoid valve according to the invention;
Figure 4 is a schematic view showing the disconnection of the power supply of the invention;
Figure 5 is a perspective view of another embodiment of this invention;
Figure 6 is a perspective view of yet another embodiment of this invention;
Figure 7A is a structural view I of solenoid valve of this invention;
Figure 7B is another structural view II of solenoid valve of this invention; and
Figure 7C is another structural view III of solenoid valve of this invention.

### DETAILED DESCRIPTION OF THE PREFERRED EMBODIMENTS

Further aspects, objects, and desirable features of the invention will be better understood from the detailed description and drawings that follow in which various embodiments of the disclosed invention are illustrated by way of examples.

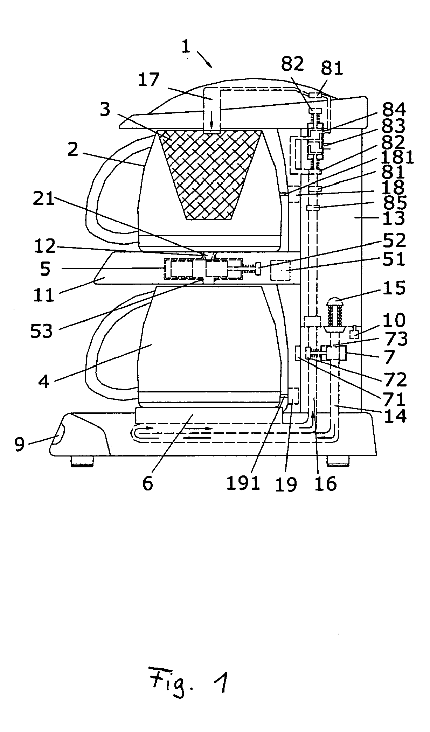

With reference to Figure 1, the invention comprises a main body 1, a supporting plate 11 positioned on the body 1, a brew cup 2 that can be flexibly dismantled from the supporting plate 11 has a strainer 3 positioned inside thereof. The characteristics of the invention lie in the following: the supporting plate 11 has a warm-keeping cup 4 placed below thereof, a guide funnel 12 is positioned between the warm-keeping cup 4 and the brew cup 2 for water to flow through, in addition, the guide funnel 12 has a solenoid valve 5 set below thereof to control the time of brewing tea in the brew cup 2.

The body 1 has a warming plate 6 positioned on the lower portion thereof for placing the cup 2 and a water tank 13 positioned on the upper portion thereof connecting a cold water tube 14, which is against the warming plate 6, in addition, the cold water tube 14 has a water piston 15 and a single-pass solenoid valve 7 positioned thereof for controlling the volumn of water inlet. The single-pass solenoid valve 7 which comprises an electromagnet 71 and an electromagnetic pusher 72 electrically connects a control panel 9. The cold water tube 14 pierces through the warming plate 6, and then, connects a hot water tube 16; the hot water tube 16 has a hot water outlet 17 set therof and positioned inside the brew cup 2, a three-way solenoid valve 8 is positioned between the hot water tube 16 and the hot water outlet 17, having a temperature sensor 85 set in front thereof for controlling the temperature of water outlet. The three-way solenoid valve 8 which comprises an electromagnet 81 and an electromagnetic pusher 82 electrically connects a control panel 9.

The body 1 on one lateral side of the brew cup 2 has a micro switch 18 set thereon, a contact 181 on the upper micro switch 18 is against the brew cup 2 and serially connects the warming plate 6; the guide funnel 12 is set on the supporting plate 11; a brew spout 21 is installed on the bottom of the brew cup 2 and set on the upper opening of the guide funnel 12, in addition, the lower opening of the guide funnel 12 is opposed to the upper opening of the warm-keeping cup 4. The solenoid valve 5 which comprises an electromagnet 51 and an electromagnetic pusher 52 electrically connects a control panel 9, which is positioned on the lateral side of the warming plate 6, the body 1 on one lateral side of the warm-keeping cup 4 has a lower micro switch 19 set thereof, a contact 191 is set on the lower micro switch 19 thereof against the warm-keeping cup 4 and electrically connects the control panel 9.

One embodiment of the invention illustrates that when the water temperature is not warm enough for brewing tea, a second outlet 84 set inside the three-way solenoid valve 8 is then closed and a first outlet 83 is opened for warm water to flow into a water tank 13 through the first outlet 83 and into a cold water tube 14 via a water piston 15, subsequently, water is heated up by the warming plate 6, flushed into the hot water tube 16 and spouted out upwards, therefore the water temperature is heightened by way of such processing flow; when the water temperature reaches a proper water temperature for brewing tea, the first outlet 83 is closed and the second outlet 84 is opened controlled by the three-way solenoid valve 8, in addition, the required water temperature is measured by said temperature sensor 85, thereby a signal is transmitted to an Integrated Circuit(IC) in the control panel 9 to determine the switch on or off of the three-way solenoid valve 8, namely, the electromagnet 81 electrifies to make the electromagnetic pusher 82 closed and the second outlet 84 in the three-way solenoid valve 8 opened, therefore, hot water flows into the brew cup 2 via the hot water outlet 17; when water is heated up during a certain period of time, the control panel 9 controls the electromagnet 71 set on the single-pass solenoid valve 7 thereof to electrify and induce the electromagnetic pusher 72, thereby a water outlet 73 inside the single-pass solenoid valve 7 is closed; therefore, the volumn of brewed tea or coffee can be controlled by controlling the volumn of heated water, based on the water flow time.

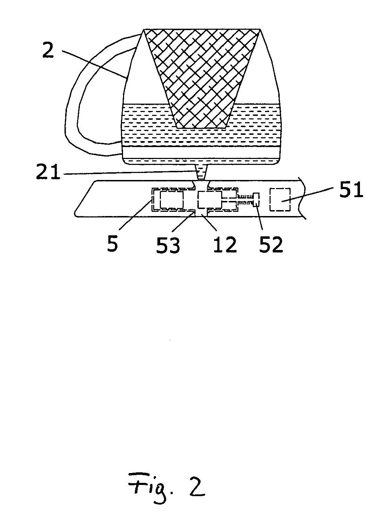

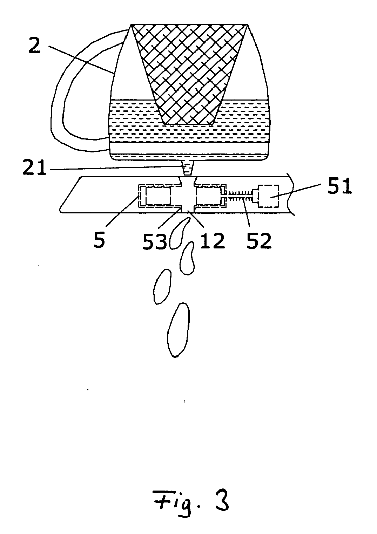

In addition, the invention has a solenoid valve 5 set between the brew cup 2 and the warm-keeping cup 4. As shown in Figure 2, when tea is freshly brewed, the electromagnet 51 of the solenoid valve 5 electrifies to induce the electromagnetic pusher 52 to shift, thereby a water outlet 53 positioned inside the solenoid valve 5 is opened, Figure 3 shows that the guide funnel 12 set between the brew cup 2 and the warm-keeping cup 4 is opened up, thereby the tea brewed on the upper portion of the machine body drops into the bottom of the warm-keeping cup 4 by flowing through the brew spout 21 and the guide funnel 12, subsequently, the warming plate 6 keeps the brewed tea warm at the temperature range from 75□ to 85□, so that the brewed tea is not easily oxidized or grow germs in the tea juice.

The electromagnet 51 of the solenoid valve 5 electrically connects the control panel 9, so that the control panel 9 is able to control the time of brewing tea. After a certain time of period, the invention electrifies the electromagnet 51 to open the solenoid valve 5, thereby the brewed tea flows into the warm-keeping cup 4 and is kept warm. Seeing that the time of brewing different tea categories varies, the invention enables the control panel 9 to control the tea brewing time.

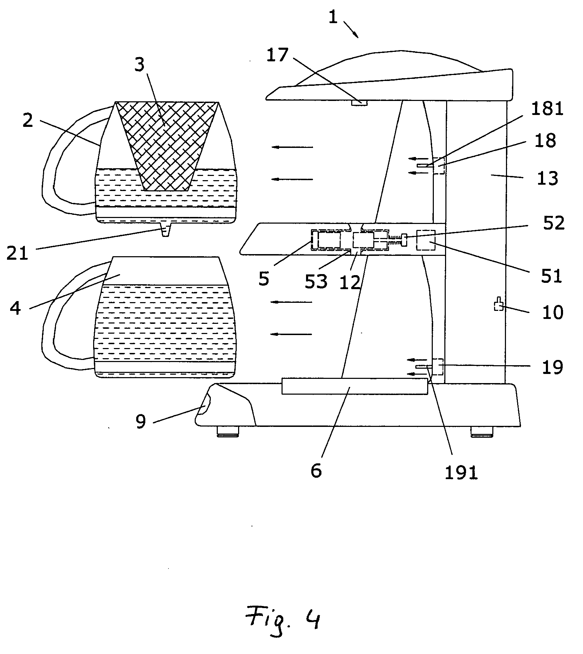

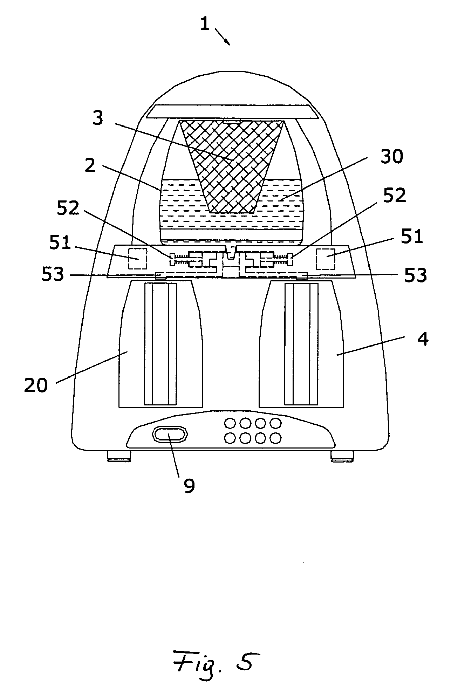

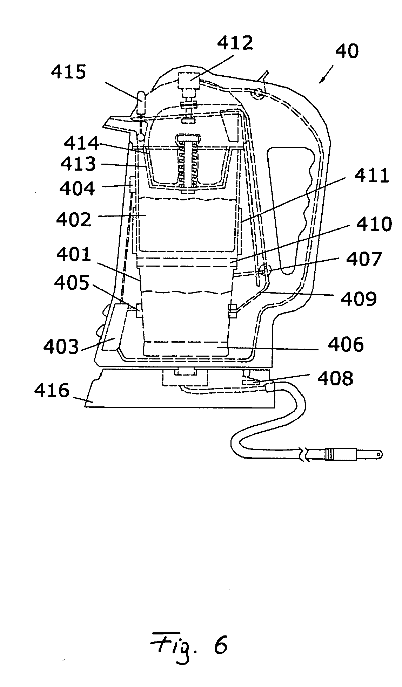

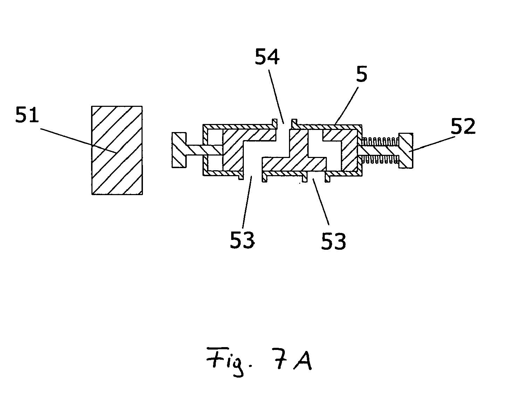

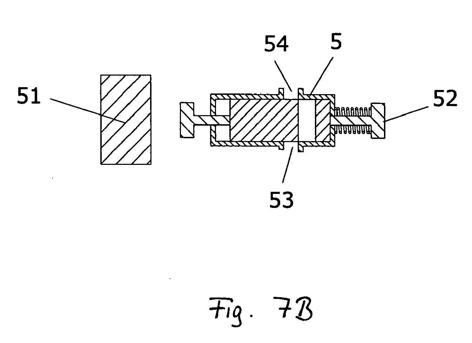

With reference to Figure 4, the invention, based on the safety use consideration, enables the upper micro switch 18 on the lateral side of the body 1 to cut off the power supply when the brew cup 2 is removed, so that the warming plate 6 does not give out heat and hot water does not flow out of the hot water outlet 17; in addition, the invention enables the lower micro switch 19 on the lateral side of the body 1 to cut off the power supply when the warm-keeping cup 4 is removed, thereby the warming plate 6 does not give out heat, hot water does not flow out of the hot water outlet 17, the electromagnet 51 of the solenoid valve 5does not electrify, and the electromagnetic pusher 52 does not shift, so that the water outlet 53 inside the solenoid valve 5 is not opened to allow tea juice to flow out from the tea making area. Moreover, the water tank 13 as a micro switch 10 set below thereof, therefore, the body 1 also cut off the power when the water tank 13 is removed.

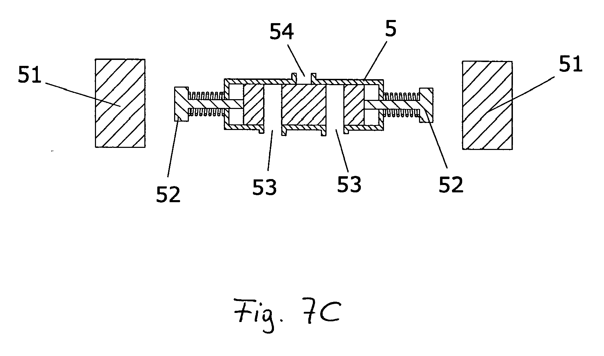

With reference to Figure 5, another embodiment of the invention illustrates the coffee making that the invention comprises a refrigerating cup 20, in addition to the aforesaid structures of the body 1, the brew cup 2, the warm-keeping cup 4, the solenoid valve 5, the control panel 9 and the strainer 3. After coffee 30 is made inside the brew cup 2, the control panel 9 controls either the left or the right electromagnet 51 on the sides of the solenoid valve 5 to electrify, thereby enabling the water outlet 53 of the solenoid valve 5 to be opened for satisfying the requirement of a coffee lover.

With reference to Figure 6, another embodiment of the invention shows that the invention applies the principle of conventional electronic coffee maker and the creativity of the invention to coffee making. The invention comprises a body 40, a water storage area 401, a warm-keeping area 402, a control panel 403, an upper temperature sensor 404, a lower temperature sensor 405, an electric hot plate 406, a three-way solenoid valve 407, a micro switch 408, a water tube 409, an active carbon 410, a warm-keeping electric heat belt 411, a solenoid valve 412, a tea/coffee-making area 413, a filter 414, an outlet button 415 and a base 416.

When water in the water storage area 401 is heated up by the electric hot plate 406, and then the heated water flows through the water tube 409 to the three-way solenoid valve 407, which is on the status of opening water outlet circle; subsequently, hot water flows back to the water storage area 401 and processed through several proceswing circles to reach the required water temperature sensed by the lower temperature sensor 405, a signal is sent to the control panel 403 for controlling the backflow water outlet of three-way solenoid valve 407 closed by the control panel 403, and then, the water outlets of the tea/coffee-making area 413 and the filter 414 are opened, enabling hot water to flow into the tea/coffee-making area 413 and the filter 414, thereby soaking the coffee powder during a certain time of period, the control panel 403 then controls the opening of the solenoid valve 412 and enables coffee 30 flows into the warm-keeping area 402, then the warm-keeping electric heat belt 411 keeps coffee warm. The embodiment applies the structures of the control panel 403 and the solenoid valve 412 to achieve the objective of controlling the water outlet volumn and the coffee making time and increasing the function of controlling water temperature for coffee making, enabling a user to directly remove the machine body 40 from the base 416 and push the outlet button 415 for obtaining coffee 30 for drinking. When the body 40 is removed from the base 416, the invention enables the micro switch 408 to cut off the power of the base 416 to enable the safety use.

With reference to Figures 7A, 7B and 7C, the invention utilizes another solenoid valve 5 to increase water temperature via the water processing circle, control the water outlet volumn to make coffee, and control the coffee-making or tea brewing time. The solenoid valve 5 comprises an electromagnet 51, an electromagnetic pusher 52, a water outlet 53 and a water inlet 54.

To conclude the above description, the automatic filter tea/coffee maker of the invention has the characteristics of comprising a tea/coffee-making area for placing the brew cup 2, so that the invention can be used to make coffee or brew tea by utilizing different function of the solenoid valve 5 to control the water outlet volumn, the water temperature and the tea or coffee making time.

The "automatic filter tea/coffee maker" of the invention is designed according to the principle of a conventional electronic coffee maker without precedent in history. In addition, compared with conventional tea set or tea cup functions, the invention comprises the originity and practicability in the industry.

New characteristics and advantages of the invention covered by this document have been set forth in the foregoing description. It is to be expressly understood, however, that the drawings are for the purpose of illustration only and are not intended as a definition of the limits of the invention. Changes in methods, shapes, structures or devices may be made in details without exceeding the scope of the invention by those who are skilled in the art. The scope of the invention is, of course, defined in the language in which the appended claims are expressed.

### Notations for parts

| | | | |
|---|---|---|---|
| body | 1 | three-way solenoid valve | 8 |
| supporting plate | 11 | electromagnet | 81 |
| guide funnel | 12 | electromagnetic pusher | 82 |
| water tank | 13 | first outlet | 83 |
| cold water tube | 14 | second outlet | 84 |
| water piston | 15 | temperature sensor | 85 |
| hot water tube | 16 | control panel | 9 |
| hot water outlet | 17 | micro switch | 10 |
| upper micro switch | 18 | refrigerating cup | 20 |
| contact | 181 | coffee | 30 |
| lower micro switch | 19 | body | 40 |
| contact | 191 | water storage area | 401 |
| brew cup | 2 | warm-keeping area | 402 |
| brew spout | 21 | control panel | 403 |
| strainer | 3 | upper temperature sensor | 404 |
| warm-keeping cup | 4 | lower temperature sensor | 405 |
| solenoid valve | 5 | electric hot plate | 406 |
| electromagnet | 51 | three-way solenoid valve | 407 |
| electromagnetic pusher | 52 | micro switch | 408 |
| water outlet | 53 | water tube | 409 |
| water inlet | 54 | active carbon | 410 |
| warming plate | 6 | warm-keeping electric heat belt | 411 |
| single-pass solenoid valve | 7 | solenoid valve | 412 |
| electromagnet | 71 | tea/coffee-making area | 413 |
| electromagnetic pusher | 72 | filter | 414 |
| water outlet | 73 | outlet button | 415 |
| | | base | 416 |

## Claims

1. An automatic filter tea/coffee maker, which comprises:
a machine body; a supporting plate positioned on the body and a brew cup, which can be flexibly dismantled from the supporting plate; the brew cup has a strainer positioned inside therof; a warm-keeping cup is positioned below the supporting plate; a brew cup positioned above the supporting plate; a guide funnel for water to flow through is positioned between the warm-keeping cup and the brew cup; in addition, the guide funnel has a solenoid valve installed below thereof to control the time of brewing tea in the brew cup.

2. The automatic filter tea/coffee maker of claim 1, wherein the body has a warming plate positioned on the lower portion thereof for placing warm-keeping cup.

3. The automatic filter tea/coffee maker of claim 1, wherein the body has a water tank positioned on the upper portion thereof connecting a cold water tube, which is against the warming plate, in addition, the cold water tube has a water piston and a single-pass solenoid valve positioned thereof for controlling the volumn of water inlet; the cold water tube pierces through the warming plate, and then, comes a hot water tube, the hot water tube has a hot water outlet set therof and positioned inside the brew cup.

4. The automatic filter tea/coffee maker of claim 3, wherein the single-pass solenoid valve which comprises an electromagnet and an electromagnetic pusher electrically connects a control panel.

5. The automatic filter tea/coffee maker of claim 3, wherein the hot water tube and the hot water outlet have a three-way solenoid valve positioned inbetween; the three-way solenoid valve as a temperature sensor set in front thereof for controlling the temperature of water outlet, comprising an electromagnet and an electromagnetic pusher, electrically connects a control panel.

6. The automatic filter tea/coffee maker of claim 1, wherein the brew cup has an upper micro switch 18 set on one lateral side thereof; a contact of the upper micro switch is against the brew cup, and connects the warming plate.

7. The automatic filter tea/coffee maker of claim 1, wherein the guide funnel is set on the supporting plate, the brew cup has the bottom thereof installed a brew spout and set on the upper opening of the guide funnel and the lower opening of the guide funnel is opposed to the upper opening of the warm-keeping cup.

8. The automatic filter tea/coffee maker of claim 1, wherein the solenoid valve which comprises an electromagnet and an electromagnetic pusher electrically connects a control panel.

9. The automatic filter tea/coffee maker of claim 7, wherein the control panel is set on the lateral side of the warming plate.

10. The automatic filter tea/coffee maker of claim 1, wherein the warm-keeping cup has a lower micro switch set on the lateral side of the body, a contact on the micro switch is against the warm-keeping cup and electrically connects the control panel.
